# EUROPÄISCHE PATENTSCHRIFT

(11) **EP 3 366 551 B1**
(45) Veröffentlichungstag und Bekanntmachung des Hinweises auf die Patenterteilung: **12.02.2020**
(21) Anmeldenummer: 17210024.0
(22) Anmeldetag: 22.12.2017
(51) Int. Cl.: B62D 15/02, G05D 1/02, G07C 5/00, B60W 30/06

(54) **VERFAHREN ZUM BETRIEB EINES FAHRZEUGS UND FAHRASSISTENZSYSTEM**
METHOD FOR OPERATING A VEHICLE AND DRIVER ASSISTANCE SYSTEM
PROCÉDÉ DE FONCTIONNEMENT D'UN VÉHICULE ET SYSTÈME D'AIDE À LA CONDUITE

(30) Priorität: 24.02.2017 DE 102017203036
(43) Veröffentlichungstag der Anmeldung: 29.08.2018
(73) Patentinhaber: Robert Bosch GmbH, 70442 Stuttgart (DE)
(72) Erfinder: Iske, Burkhard, 71229 Leonberg (DE)

(56) Entgegenhaltungen:
- EP-A2- 2 985 571
- DE-A1-102015 201 205
- US-A1- 2015 039 213

## Beschreibung

Die Erfindung betrifft ein Verfahren zum Betrieb eines Fahrzeugs, insbesondere eines autonom fahrenden Fahrzeugs. Des Weiteren wird ein Fahrassistenzsystem zur Durchführung des Verfahrens angegeben.

### Stand der Technik

Die Automatisierung von Fahrfunktionen schreitet voran. In DE 10 2012 200 625 A1 wird ein automatisiertes Einparksystem beschrieben, das es dem Fahrer erlaubt, von außerhalb des Fahrzeugs das Fahrzeug eigenständig einparken zu lassen. Dabei muss der Fahrer jederzeit über eine Fernbedienung das Fahrmanöver kontrollieren und hat die Verantwortung für das Fahrmanöver. In kritischen Fällen kann er das Manöver unterbrechen, um möglichen Schaden abzuwenden.

Ein nächster Schritt der Automatisierung ist es, den Fahrer aus der Verantwortung für das Fahrmanöver zu nehmen, auch als *Highly Automated Parking* bezeichnet. Dabei aktiviert der Fahrer das Manöver, muss dieses aber nicht mehr überwachen und ist damit nicht mehr in der Verantwortung. Der Fahrer muss sich gar nicht mehr in der Nähe des Fahrzeuges aufhalten.

In US 9,196,164 B1 wird beschrieben, dass autonom fahrende Fahrzeuge mit ihrer Umgebung kommunizieren können. Dabei teilt das Fahrzeug Passanten mit, dass es diese erkannt hat und wohin es fahren wird. Die Kommunikation mit der Umgebung ist insbesondere deshalb erforderlich, da kein Blickkontakt mit dem Fahrer mehr möglich ist. Das Dokument EP2985571 ist als nächstliegender Stand der Technik zu sehen und offenbart eine interaktives Fernbedienungsseite beziehungsweise ein interaktives Display mit einem Kommunikationsinterface für Sprache und/oder Video sowie weitere Multimediainhalte für ein beispielsweise unbemanntes autonomes Fahrzeug. Die interaktive Fernbedienungsseite stellt insbesondere eine Kommunikation zwischen einem entfernten Nutzer und einem vor Ort befindlichem Bediener durch ein Fenster des Fahrzeugs bereit.

### Offenbarung der Erfindung

Die Erfindung sieht ein Verfahren zum Betrieb eines Fahrzeugs vor, wobei das Fahrzeug im Zustand des Parkens die Notwendigkeit eines Fahrmanövers erkennt, und nach Freigabe durch den Fahrer das Fahrmanöver autonom durchführt, wobei das Fahrzeug die Notwendigkeit des Fahrmanövers anhand akustischer Informationen erkennt.

Unter Zustand des Parkens wird gemäß einer Ausführungsform verstanden, dass das Fahrzeug abgestellt ist. Typischerweise ist es dabei abgeschlossen und es befindet sich kein Insasse im Fahrzeug. Typischerweise ist dabei die Handbremse angezogen. Unter Zustand des Parkens wird gemäß einer weiteren Ausführungsform verstanden, dass das Fahrzeug auf dem Weg zu einem Abstellplatz ist, wobei das Fahrzeug ggf. eine Wegstrecke zum Abstellplatz autonom fährt und dann den Parkvorgang autonom durchführt. In allen Fällen hat sich der Fahrer vom Fahrzeug entfernt und kommuniziert aus der Entfernung mit dem Fahrzeug. Ein Vorteil des Verfahrens ist, dass der Fahrer des autonom fahrenden Fahrzeugs nicht zum Fahrzeug zurückkehren muss, um das Fahrmanöver durchzuführen.

Unter autonomes Durchführen des Fahrmanövers wird im Rahmen der vorliegenden Offenbarung verstanden, dass das Fahrzeug das Fahrmanöver selbstständig durchführt, was die Längs- und Querführung angeht, d.h. das Fahrzeug lenkt und beschleunigt selbst. Bevorzugt ist vorgesehen, dass das Fahrzeug auch die Fahrtrajektorie des Fahrmanövers selbstständig berechnet. Die Fahrtrajektorie wird dabei typischerweise durch einen oder mehrere Trajektorienabschnitte gebildet, welche z. B. aus einer Menge von diskreten geometrischen Elementen ausgewählt sind, wie Geradenabschnitte, Kurvenabschnitte und Klothoidenabschnitte.

Das Fahrmanöver wird von einem Fahrassistenzsystem des Fahrzeugs selbstständig durchgeführt. Bevorzugt ist jedoch vorgesehen, dass das Fahrzeug während der Durchführung des Fahrmanövers externe Steuerbefehle empfangen kann, damit der Fahrer aus der Entfernung Korrekturen durchführen oder Gefahrensituationen abwenden kann. Die Steuerung kann auch durch Personen in der Nähe des Fahrzeugs erfolgen.

Das Fahrzeug erkennt die Notwendigkeit des Fahrmanövers anhand akustischer Informationen, insbesondere Sprachbefehle. Diese Art der Kommunikation ist insbesondere sinnvoll, da es eine natürliche Art der Kommunikation ist. Sprachbefehle können durch Parkplatzwächter, Passanten oder anderen Fahrern an das autonom fahrende Fahrzeug übermittelt werden. Dabei kann beispielsweise auch vorgesehen sein, dass das Erkennen der Notwendigkeit des Fahrmanövers durch ein Codewort getriggert wird.

Es kann vorgesehen sein, dass das Fahrzeug während der Durchführung des Manövers über Sprache zurückkommuniziert, d.h. z.B. dass dem Parkplatzwächter, den Passanten oder anderen Fahrern über Sprachausgaben mitgeteilt wird, dass diese erkannt wurden und wohin das Fahrzeug fahren wird. Weiterhin kann die Autorisierung oder die Nichtautorisierung des Fahrmanövers durch den Fahrer zurückkommuniziert werden.

Das Fahrmanöver umfasst bevorzugt ein Umparken oder ein Rangieren des Fahrzeugs. Als Umparken wird hierin eine Überführung des Fahrzeugs von einem ersten Parkplatz auf einen zweiten Parkplatz bezeichnet. Als Rangieren wird hierin bezeichnet, wenn das Fahrzeug ausgehend von einem ersten Parkplatz kurzfristig auf eine freie Position fährt, um später auf den ersten Parkplatz zurückzukehren, z. B. nachdem ein weiteres Fahrzeug eine vom ersten Parkplatz begrenzte Engstelle passiert hat.

Falls beim Umparken ein besserer Parkplatz während der Fahrt vom Startpunkt bis zum Ziel frei wird, kann das Manöver kurzfristig variiert werden.

Das Verfahren wird beispielsweise auf einem Großparkplatz ausgeführt. Mit "Großparkplatz" wird hierin ein Parkplatz für mehrere Fahrzeuge bezeichnet, zur Abgrenzung gegen den Begriff "Parkplatz" des Fahrzeugs. Der Großparkplatz kann beispielsweise ein Parkhaus sein. Alternativ hierzu kann der Großparkplatz eine Tiefgarage sein. Der Großparkplatz kann sich über mehrere Etagen erstrecken oder auf einer Ebene befinden. Er kann beispielsweise ein Gelände vor einem Supermarkt, vor einem Zoo, vor einem Stadion oder Ähnliches sein.

Das Verfahren kann beim sogenannten Valet-Parken durchgeführt werden. Hierbei parkt der Fahrer das Fahrzeug auf einem provisorischen Parkplatz, und der Parkwächter steuert mittels Sprachbefehlen das Fahrzeug zum Zielparkplatz. Erfindungsgemäß wird das Fahrmanöver nach Freigabe durch den Fahrer autonom durchgeführt.

Bevorzugt wird dem Fahrer des Fahrzeugs eine Nachricht übermittelt, dass das Fahrmanöver notwendig ist. Nach einer Ausführungsform umfasst die Nachricht mit der Fahrmanöverinformation an den Fahrer lediglich die Nachricht, dass eine, ggf. zeitlich begrenzte, externe Steuerung des Fahrzeugs mittels Sprachbefehle oder mittels einer weiteren Fernbedienung durch eine anwesende Person erfolgen soll. Alternativ hierzu umfasst die Nachricht mit der Fahrmanöverinformation an den Fahrer eine Zielangabe des neuen Parkplatzes, beispielsweise grafisch dargestellt und/oder mit Angabe der Entfernung zum derzeitigen Parkplatz. Im Falle eines Parkhauses kann die Zielangabe auch zum Beispiel die Angabe der Parkplatznummer, der Parkebene usw. umfassen. In weiteren Ausbaustufen können Fahrer freie Parkplätze in der Umgebung des Fahrzeugs auswählen.

Der Fahrer erteilt mittels einer weiteren Nachricht die Freigabe, z.B. durch einfaches Bestätigen. Erteilt der Fahrer die Freigabe nicht, dann wird kein Fahrmanöver durchgeführt. Nichterteilen der Freigabe kann dadurch erfolgen, dass keine Antwort des Fahrers erfolgt oder dass die Freigabe aktiv abgelehnt wird.

Erfindungsgemäß ist außerdem ein Fahrassistenzsystem eines Fahrzeugs vorgesehen, mit einem Überwachungsmodul, das eingerichtet ist, im Zustand des Parkens die Notwendigkeit eines Fahrmanövers durch Empfang und Auswertung akustischer Informationen zu erkennen, einem fahrzeugseitigen Kommunikationsmodul, das eingerichtet ist, bei erkannter Notwendigkeit eines Fahrmanövers den Fahrer des Fahrzeugs um Freigabe des Fahrmanövers zu ersuchen, einem externen Kommunikationsmodul, das mit dem fahrzeugseitigen Kommunikationsmodul verbunden ist, um mit diesem zu kommunizieren, und einem Fahrmodul, das eingerichtet ist, nach Freigabe durch den Fahrer das Fahrmanöver autonom durchzuführen.

Bevorzugt ist das Fahrassistenzsystem zur Durchführung der hierin beschriebenen Verfahren ausgebildet und/oder eingerichtet. Dementsprechend sollen die im Rahmen der Verfahren beschriebenen Merkmale entsprechend für das Fahrassistenzsystem und umgekehrt die im Rahmen des Fahrassistenzsystem beschriebenen Merkmale entsprechend für die Verfahren als offenbart gelten.

Das Überwachungsmodul umfasst Mittel zum Empfang und zur Auswertung akustischer Informationen, insbesondere in Form von Sprachbefehlen. Die Mittel umfassen beispielsweise ein oder mehrere Mikrophone und eine Spracherkennungssoftware. Für die Spracherkennungssoftware kann beispielsweise die Software eines Moduls, das im Fahrzeuginnenraum Sprachbefehle entgegennimmt, wieder verwendet werden.

Das fahrzeuginterne Kommunikationsmodul ist mit dem externen Kommunikationsmodul verbunden und kann beispielsweise eine Anzeige auf einem das externe Kommunikationsmodul aufweisenden mobilen Gerät ansteuern oder eine Sprachnachricht absetzen oder auch ein Gespräch mit dem Fahrer führen.

In einer Ausführungsform ist das externe Kommunikationsmodul ein Kommunikationsmodul eines mobilen Geräts, beispielsweise ein Laptop, Smartphone, Tablet, Wearable oder eine Smartwatch. Bevorzugt weist das mobile Gerät ein Kommunikationsmodul mit Push-Nachrichtenfunktion auf, besonders bevorzugt mit einer direkten Antwortfunktion.

Das externe Kommunikationsmodul weist eine Eingabeeinheit auf, mittels welcher der Fahrer das Manöver autorisieren oder ablehnen kann. Die Eingabeeinheit kann ein Sprachschnittstelle und/oder eine berührungssensitive Schnittstelle umfassen, aber auch mittels Eingabegeräten wie Stiften oder ähnliches bedienbar sein.

Das Kommunikationsprotokoll zwischen Fahrzeug und Fahrer ist im Prinzip beliebig, umfasst jedoch bevorzugt eine Verschlüsselung der Kommunikation. Die Kommunikation kann über Internet, LAN, W-LAN, Mobilfunk usw. erfolgen.

Das Fahrzeug ist bevorzugt mit weiteren Umgebungserfassungseinrichtungen und Kommunikationseinrichtungen ausgestattet. Die Fahrzeugumgebung und idealerweise zusätzliche Metainformationen dazu können von den Umgebungserfassungseinrichtungen des Fahrzeugs erfasst und interpretiert werden. Umgebungserfassungseinrichtungen können in dem Fahrzeug verbaute Kameras, ein Ultraschallsystem, ein Radarsystem und/oder ein LIDAR-System umfassen. Die erfasste und interpretierte Fahrzeugumgebung kann dem Fahrer z. B. als Entscheidungshilfe übermittelt werden. Die Umgebungserfassungseinrichtung ist bevorzugt bereits im Serieneinsatz als Teil eines Parkassistenzsystems vorhanden.

Die Erfindung umfasst auch die entsprechenden Subsysteme zur Verwendung in einem der beschriebenen Fahrassistenzsysteme, nämlich das fahrzeugseitige Subsystem, aufweisend das entsprechend eingerichtete Überwachungsmodul, fahrzeugseitige Kommunikationsmodul und Fahrmodul, sowie das externe Subsystem aufweisend das externe Kommunikationsmodul.

Die Erfindung umfasst auch Computerprogramme, umfassend Befehle, die bewirken, dass eines der zuvor beschriebenen Fahrassistenzsysteme oder Subsysteme die entsprechenden Schritte eines der zuvor beschriebenen Verfahren ausführt. Bei dem Computerprogramm kann es sich beispielsweise um Module zur Implementierung des Fahrassistenzsystems oder eines Subsystems hiervon in einem Fahrzeug oder auf einem mobilen Gerät handeln.

Die Erfindung umfasst auch ein computerlesbares Medium, auf dem das Computerprogramm gespeichert ist. Das Computerprogramm kann beispielsweise auf einem permanenten oder wiederbeschreibbaren Speichermedium, auf einer CD-ROM, DVD, Blu-ray Disc oder einem USB-Stick gespeichert sein. Zusätzlich oder alternativ dazu kann das Computerprogramm auf einer Computereinrichtung wie etwa auf einem Server oder einem Cloud-Computing-System zum Herunterladen bereitgestellt werden, z.B. über ein Datennetzwerk wie das Internet, oder eine Kommunikationsverbindung wie etwa eine Telefonleitung oder eine drahtlose Verbindung.

### Vorteile der Erfindung

Neben der Information des autonomen Fahrzeugs über seine Absichten an die Umgebung, wie beispielsweise in der US 9,196,164 B1 beschrieben, wird mit der vorliegenden Erfindung die Kommunikation zwischen Umgebung und Fahrzeug relevant. Falls ein autonom fahrendes Fahrzeug im Parkzustand in eine sogenannte Deadlock-Verkehrssituation, d.h. eine verklemmte Verkehrssituation, verwickelt ist, kann dem Fahrzeug über Sprachbefehle mitgeteilt werden, wohin es fahren soll, um die Deadlock Situation aufzulösen.

Ein Vorteil ist, dass der Fahrer des parkenden Fahrzeugs nicht zum Fahrzeug zurückkehren muss, um die Situation aufzulösen. Der Fahrer erhält lediglich eine entsprechende Nachricht auf seinem Smartphone, um die angeforderte Aktion freizugeben.

Für Fahrzeuge, die ein Mikrofon aufweisen, zeigt die Erfindung eine weitere Anwendung auf, einen zusätzlichen *Use Case.*

### Kurze Beschreibung der Zeichnung

Ausführungsbeispiele der Erfindung sind in der folgenden Zeichnung dargestellt und in der nachfolgenden Beschreibung näher erläutert.

Es zeigt:

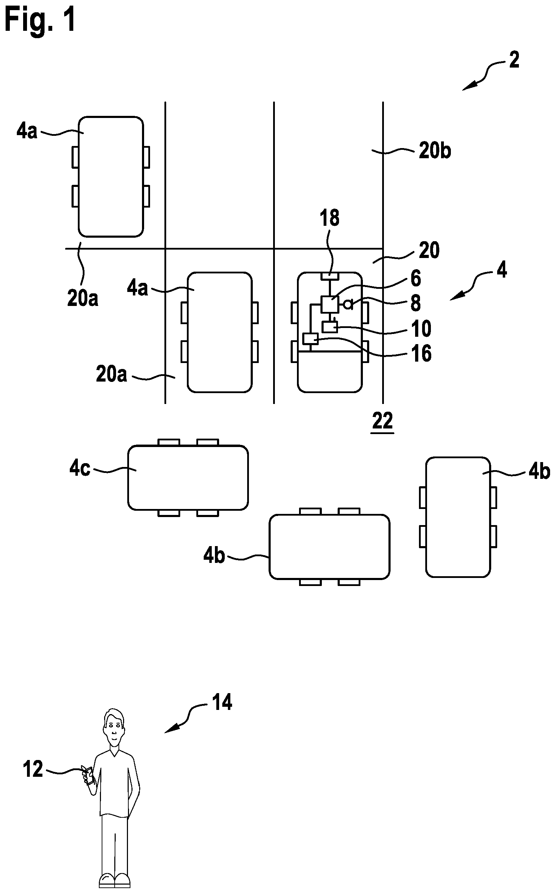

- Figur 1: einen Großparkplatz mit einer Deadlock-Situation.

### Ausführungsformen der Erfindung

Figur 1 zeigt ein auf einem Großparkplatz 2 geparktes erfindungsgemäß ausgestattetes Fahrzeug 4.

Das erfindungsgemäß ausgestattete Fahrzeug 4 weist ein Fahrassistenzsystem 6 auf, das typische Hardwarekomponenten wie Recheneinheiten, Speichereinheiten, Bussysteme und Kommunikationsschnittstellen umfasst. Das Fahrassistenzsystem 6 umfasst außerdem ein Überwachungsmodul 8, das eingerichtet ist, im Zustand des Parkens die Notwendigkeit eines Fahrmanövers zu erkennen. In der dargestellten Ausführungsform umfasst das Überwachungsmodul 8 zu diesem Zweck ein Mikrophon, welches die Umgebungsgeräusche aufnimmt. Weiterhin umfasst das Überwachungsmodul 8 eine Spracherkennungssoftware zur Auswertung der akustischen Informationen des Mikrophons.

Das Fahrassistenzsystem 6 umfasst weiterhin ein fahrzeugseitiges Kommunikationsmodul 10, das funktionell mit dem Überwachungsmodul 8 verbunden und eingerichtet ist, bei erkannter Notwendigkeit eines Fahrmanövers den Fahrer 14 des Fahrzeugs 4 um Freigabe des Fahrmanövers zu ersuchen.

Hierzu kommuniziert das fahrzeugseitige Kommunikationsmodul 10 mit einem externen Kommunikationsmodul 12, welches der Fahrer 14 bei sich trägt. Im Rahmen der vorliegenden Offenbarung wird das externe Kommunikationsmodul 12 zum Fahrassistenzsystem 6 hinzugezählt.

Der Fahrer 14 befindet sich nach dem Abstellen des erfindungsgemäß ausgestatteten Fahrzeugs 4 nicht mehr in dessen Nähe, typischerweise auch nicht mehr in Sichtweite. Die Kommunikation des fahrzeugseitigen Kommunikationsmoduls 10 mit dem externen Kommunikationsmodul 12 findet beispielsweise über eine Internetverbindung statt. Das externe Kommunikationsmodul 12 kann als ein Kommunikationsmodul eines mobilen Geräts ausgebildet sein.

Das Fahrassistenzsystem 6 umfasst weiterhin ein Fahrmodul 16, das eingerichtet ist, nach Freigabe durch den Fahrer 14 ein autonomes Durchführen des Fahrmanövers zu veranlassen. Hierzu übernimmt das Fahrmodul 16 bekanntermaßen Beschleunigen, Bremsen und Lenken des erfindungsgemäß ausgestatteten Fahrzeugs 4.

Das erfindungsgemäß ausgestattete Fahrzeug 4 umfasst außerdem eine Umgebungserfassungseinrichtung 18, die beispielsweise Ultraschallsensoren, Radarsensoren, Kameras oder LIDAR-Sensoren umfasst. Die Umgebungserfassungseinrichtung 18, wie auch die weiteren Komponenten des Fahrassistenzsystems 6 können in weiteren Fahrassistenzanwendungen eingesetzt werden, z. B. zur Totwinkelerfassung, als Tempo- oder Spurassistent, Parkassistent, usw.

Das erfindungsgemäß ausgestattete Fahrzeug 4 parkt auf dem Großparkplatz 2 auf einem ersten Parkplatz 20.

Auf dem Großparkplatz 2 sind weitere Fahrzeuge 4a auf weiteren Parkplätzen 20a geparkt.

In der dargestellten Situation bilden zwei falsch abgestellte Fahrzeuge 4b mit dem erfindungsgemäß ausgestatteten Fahrzeug 4 eine Engstelle 22. Ein vorbeifahrendes Fahrzeug 4c kann die Engstelle 22 nicht passieren.

Der weitere Fahrer des vorbeifahrenden Fahrzeugs 4c fordert das erfindungsgemäß ausgestattete Fahrzeug 4 auf, zu rangieren, um die Engstelle 22 zeitweilig frei zu machen.

Das Überwachungsmodul 8 des erfindungsgemäß ausgestatteten Fahrzeugs 4 erkennt den Sprachbefehl des weiteren Fahrers des vorbeifahrenden Fahrzeugs 4c, die Engstelle 22 zeitweilig frei zu machen und sendet über das fahrzeugseitige Kommunikationsmodul 10 eine Anfrage an den Fahrer 14. Nach dessen Freigabe rangiert das erfindungsgemäß ausgestattete Fahrzeug 4 selbstständig, d.h. es lässt das vorbeifahrende Fahrzeug 4c vorbei und fährt zurück auf seinen Parkplatz 20.

In einer alternativen Ausführungsform fordert der weitere Fahrer des vorbeifahrenden Fahrzeugs 4c das erfindungsgemäß ausgestattete Fahrzeug 4 auf, umzuparken, um die Engstelle 22 dauerhaft frei zu machen. Das Überwachungsmodul 8 des erfindungsgemäß ausgestatteten Fahrzeugs 4 erkennt den Sprachbefehl des weiteren Fahrers des vorbeifahrenden Fahrzeugs 4c, umzuparken und sendet über das fahrzeugseitige Kommunikationsmodul 10 eine Anfrage an den Fahrer 14. Nach dessen Freigabe parkt sich das erfindungsgemäß ausgestattete Fahrzeug 4 selbstständig um, z. B. auf den freien Parkplatz 20b in der Nähe.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Fahrzeugs (4), wobei das Fahrzeug (4) im Zustand des Parkens die Notwendigkeit eines Fahrmanövers erkennt, und nach Freigabe durch den Fahrer (14) das Fahrmanöver autonom durchführt, wobei das Fahrzeug (4) die Notwendigkeit des Fahrmanövers anhand akustischer Informationen erkennt.

2. Verfahren nach einem der vorhergehenden Ansprüche, **dadurch gekennzeichnet, dass** dem Fahrer (14) des Fahrzeugs (4) eine Nachricht übermittelt wird, dass das Fahrmanöver notwendig ist und der Fahrer (14) mittels einer weiteren Nachricht die Freigabe erteilt.

3. Verfahren nach einem der vorhergehenden Ansprüche, **dadurch gekennzeichnet, dass** das Fahrmanöver ein Umparken oder Rangieren des Fahrzeugs (4) umfasst.

4. Verfahren nach einem der vorhergehenden Ansprüche, **dadurch gekennzeichnet, dass** das Verfahren auf einem Großparkplatz (2) ausgeführt wird.

5. Fahrassistenzsystem (6) eines Fahrzeugs (4) mit einem Überwachungsmodul (8), das eingerichtet ist, im Zustand des Parkens die Notwendigkeit eines Fahrmanövers durch Empfang und Auswertung akustischer Informationen zu erkennen, einem fahrzeugseitigen Kommunikationsmodul (10), das eingerichtet ist, bei erkannter Notwendigkeit eines Fahrmanövers den Fahrer (14) des Fahrzeugs (4) um Freigabe des Fahrmanövers zu ersuchen, einem externen Kommunikationsmodul (12), das mit dem fahrzeugseitigen Kommunikationsmodul (10) verbunden ist, um mit diesem zu kommunizieren, und einem Fahrmodul (16), das eingerichtet ist, nach Freigabe durch den Fahrer (14) das Fahrmanöver autonom durchzuführen.

6. Fahrassistenzsystem (6) nach Anspruch 5, **dadurch gekennzeichnet, dass** das externe Kommunikationsmodul (12) ein Kommunikationsmodul eines mobilen Geräts ist.

7. Fahrzeugseitiges Subsystem zur Verwendung in einem Fahrassistenzsystem (6) nach einem der Ansprüche 5 oder 6.

8. Externes Subsystem zur Verwendung in einem Fahrassistenzsystem (6) nach einem der Ansprüche 5 oder 6.

9. Computerprogramm, umfassend Befehle, die bewirken, dass ein Fahrassistenzsystem (6) nach einem der Ansprüche 5 oder 6, ein fahrzeugseitiges Subsystem nach Anspruch 7 oder ein externes Subsystem nach Anspruch 8 die entsprechenden Schritte eines der Verfahren nach einem der Ansprüche 1 bis 4 ausführt.

10. Computerlesbares Medium, auf dem das Computerprogramm nach Anspruch 9 gespeichert ist.

## Claims

1. Method for operating a vehicle (4), wherein the vehicle (4) detects the need for a driving manoeuvre in the parking state, and after enabling by the driver (14) the driving manoeuvre is carried out autonomously, wherein the vehicle (4) detects the need for a driving manoeuvre on the basis of acoustic information.

2. Method according to one of the preceding claims, **characterized in that** a message that the driving manoeuvre is necessary is conveyed to the driver (14) of the vehicle (4), and the driver (14) performs the enabling by means of a further message.

3. Method according to one of the preceding claims, **characterized in that** the driving manoeuvre comprises reparking or manoeuvring the vehicle (4).

4. Method according to one of the preceding claims, **characterized in that** the method is executed in a large car park (2).

5. Driving assistance system (6) of a vehicle (4) having a monitoring module (8) which is configured to detect, in the parking state, the need for a driving manoeuvre by receiving and evaluating acoustic information, a vehicle-mounted communication module (10) which is configured to request the driver (14) of the vehicle (4), when the need for a driving manoeuvre is detected, to enable the driving manoeuvre, an external communication module (12) which is connected to the vehicle-mounted communication module (10) in order to communicate therewith, and a driving module (16) which is configured to carry out the driving manoeuvre autonomously after enabling by the driver (14).

6. Driving assistance system (6) according to Claim 5, **characterized in that** the external communication module (12) is a communication module of a mobile device.

7. Vehicle-mounted subsystem for use in a driving assistance system (6) according to one of Claims 5 and 6.

8. External subsystem for use in a driving assistance system (6) according to one of Claims 5 and 6.

9. Computer programme comprising instructions which cause a driving assistance system (6) according to one of Claims 5 and 6, a vehicle-mounted subsystem according to Claim 7 or an external subsystem according to Claim 8, to execute the corresponding steps of one of the methods according to one of Claims 1 to 4.

10. Computer-readable medium in which the computer programme according to Claim 9 is stored.

## Revendications

1. Procédé destiné à faire fonctionner un véhicule (4), sachant que le véhicule (4) à l'état de parcage identifie la nécessité d'une manœuvre de conduite et exécute de façon autonome la manœuvre de conduite après autorisation par le conducteur (14), sachant que le véhicule (4) identifie la nécessité de la manœuvre de conduite à l'aide d'informations acoustiques.

2. Procédé selon l'une quelconque des revendications précédentes, **caractérisé en ce qu'**un message est transmis au conducteur (14) du véhicule (4), que la manœuvre de conduite est nécessaire et le conducteur (14) donne l'autorisation au moyen d'un autre message.

3. Procédé selon l'une quelconque des revendications précédentes, **caractérisé en ce que** la manœuvre de conduite comprend le restationnement ou la mise en place du véhicule (4).

4. Procédé selon l'une quelconque des revendications précédentes, **caractérisé en ce que** le procédé est exécuté sur une aire de stationnement de grande dimension (2).

5. Système d'aide à la conduite (6) d'un véhicule (4) avec un module de surveillance (8), qui est agencé pour identifier à l'état de parcage, la nécessité d'une manœuvre de conduite grâce à la réception et à l'évaluation d'informations acoustiques, avec un module de communication (10) côté véhicule, qui est agencé pour demander au conducteur (14) du véhicule (4) une fois la nécessité d'une manœuvre de conduite identifiée, l'autorisation de la manœuvre de conduite, avec un module de communication externe (12), qui est relié au module de communication (10) côté véhicule, pour communiquer avec celui-ci, et avec un module de conduite (16), qui est agencé pour exécuter de façon autonome la manœuvre de conduite après autorisation par le conducteur (14).

6. Système d'aide à la conduite (6) selon la revendication 5, **caractérisé en ce que** le module de communication externe (12) est un module de communication d'un appareil mobile.

7. Sous-système côté véhicule destiné à l'utilisation dans un système d'aide à la conduite (6) selon l'une quelconque des revendications 5 et 6.

8. Sous-système externe destiné à l'utilisation dans un système d'aide à la conduite (6) selon l'une quelconque des revendications 5 et 6.

9. Programme informatisé comprenant des ordres, qui font qu'un système d'aide à la conduite (6), selon l'une quelconque des revendications 5 et 6, un sous-système côté véhicule selon la revendication 7 ou un sous-système externe selon la revendication 8, exécute les étapes correspondantes d'un des procédés selon l'une quelconque des revendications 1 à 4.

10. Moyen lisible par un ordinateur sur lequel le programme informatisé est mémorisé selon la revendication 9.
